Europäisches Patentamt

European Patent Office

Office européen des brevets

(11) Veröffentlichungsnummer: **0 408 938 A2**

## (12) EUROPÄISCHE PATENTANMELDUNG

(21) Anmeldenummer: **90112214.3**

(51) Int. Cl.⁵: **G01M 3/16**

(22) Anmeldetag: **27.06.90**

(30) Priorität: **21.07.89 DE 3924057**

(43) Veröffentlichungstag der Anmeldung:
**23.01.91 Patentblatt 91/04**

(84) Benannte Vertragsstaaten:
**AT BE CH DE ES FR GB GR IT LI LU NL SE**

(71) Anmelder: **DIDIER-WERKE AG**
**Lessingstrasse 16-18**
**D-6200 Wiesbaden(DE)**

(72) Erfinder: **Locht, Jean-Baudouin**
**Am Telegraph 6**
**D-5202 Hennef/Söven(DE)**
Erfinder: **Müller, Johann**
**Im Tentefeld 18**
**D-5064 Rösrath(DE)**

(74) Vertreter: **Brückner, Raimund, Dipl.-Ing.**
**c/o Didier-Werke AG Lessingstrasse 16-18**
**D-6200 Wiesbaden(DE)**

(54) **Anordnung zur Überwachung der Flüssigkeitsdichtheit einer Trennwandung.**

(57) Eine Anordnung zur Überwachung der Flüssigkeitsdichtheit einer Trennwandung weist Leitschichten (2, 4, 7) auf, zwischen denen Dichtschichten (3, 6) angeordnet sind. Um eine lückenlose Überwachung wenigstens der Dichtschichten (3) und die Ortung eines etwaigen Lecks zu ermöglichen, sind zwei der Leitschichten (4, 7) in Segmente (5, 8) unterteilt, die sich überlappen.

Fig. 1

EP 0 408 938 A2

ANORDNUNG ZUR ÜBERWACHUNG DER FLÜSSIGKEITSDICHTHEIT EINER TRENNWANDUNG

Die Erfindung betrifft eine Anordnung zur Überwachung der Flüssigkeitsdichtheit einer Trennwandung, an der eine erste und eine zweite elektrisch leitende Leitschicht Elektroden bilden, die durch eine erste Isolierschicht getrennt sind, wobei wenigstens eine der Leitschichten in Segmente unterteilt ist und auf die zweite Leitschicht eine zweite Isolierschicht aufgebracht ist.

In dem DE-GM 1 931 748 ist eine derartige Anordnung beschrieben. Sie gestattet die Erkennung eines Lecks mittels elektrischer Widerstandsmessung, auch wenn die Trennwandung optisch nicht kontrollierbar ist.

Bei dem DE-GM 1 931 748 bildet die Außenwand eines metallischen Öltanks die zu überwachende Trennwandung und die erste Leitschicht. Auf diese ist die erste Isolierschicht aufgebracht. Die erste Isolierschicht braucht keine Dichtfunktion zu übernehmen. In sie soll beim Undichtwerden des Öltanks Flüssigkeit treten, die dann den elektrischen Isolationswiderstand zwischen den beiden Elektroden erniedrigt.

Die zweite Leitschicht ist beim DE-GM 1 931 748 in Segmente aufgeteilt, um die Lage eines etwaigen Lecks am Öltank orten zu können. Die zweite Isolierschicht dient der Trennung des Öls im Öltank von der zweiten Leitschicht. Zwischen den Segmenten der zweiten Leitschicht bestehen zwangsläufig Lücken. Liegt die Undichtheit im Bereich einer Lücke, dann läßt sich eine solche Undichtheit nicht erfassen. Dies beeinträchtigt die Funktion beträchtlich.

Dichtschichten auf, insbesondere zementgebundenen, meist ebenen Untergründen sind in der Regel durch keramische Platten, Steine oder Estriche abgedeckt. Solche Dichtschichten können also visuell nicht auf Dichtheit überprüft werden. Eine Anordnung nach dem DE-GM 1 931 748 ist für die Überwachung solcher Dichtschichten wenig geeignet, da die Segmentierung Lücken bestehen läßt, in deren Bereich Lecks nicht erfaßt werden können. Auf die Segmentierung zu verzichten, wäre ungünstig, da dann die Lage des Lecks der Dichtschicht nicht geortet werden könnte.

Aufgabe der Erfindung ist es, eine Anordnung der eingangs genannten Art vorzuschlagen, die eine lückenlose Überwachung einer Dichtschicht auf Flüssigkeitsdichtheit und die Ortung eines etwaigen Lecks gestattet.

Erfindungsgemäß ist obige Aufgabe bei einer Anordnung der eingangs genannten Art dadurch gelöst, daß die Isolierschichten als zu überwachende erste und zweite Dichtschichten aus gebildet sind, daß auf die zweite Dichtschicht eine dritte Leitschicht aufgebracht ist, daß auch die dritte Leitschicht in Segmente unterteilt ist und daß sich die Segmente der zweiten und der dritten Leitschichten überlappen.

Die Dichtschichten weisen einen hohen elektrischen Isolationswiderstand auf. Befindet sich in ihnen ein Leck, dann tritt in dieses Flüssigkeit ein, die den Isolationsaufwand herabsetzt. Durch eine Widerstandsmessung zwischen der ersten und der zweiten Leitschicht sind Lecks der ersten Dichtschicht feststellbar, solange sie nicht im Bereich der Lücken zwischen den Segmenten der zweiten Leitschicht liegen. Liegen sie dort, dann sind sie durch eine Widerstandsmessung zwischen der ersten und der dritten Leitschicht feststellbar. Damit läßt sich die erste Dichtschicht lückenlos und die zweite Leitschicht weitgehend auf Undichtigkeiten kontrollieren. Die Widerstandsmessungen können automatisch oder manuell erfolgen. Die Lage eines etwaigen Lecks ist dadurch feststellbar, daß die Widerstandsmessungen zwischen der ersten Leitschicht und den Segmenten der zweiten und dritten Leitschicht nacheinander erfolgen, so daß feststellbar ist, zwischen welchem der Segmente der zweiten bzw. dritten Leitschicht und der ersten Leitschicht ein erniedrigter Isolationswiderstand vorliegt.

Die erste Leitschicht kann auf einem, insbesondere zementgebundenen, Untergrund angeordnet sein. Ist der Untergrund selbst leitfähig, dann kann er selbst die erste Leitschicht bilden.

Vorteilhafte Ausgestaltungen der Erfindung ergeben sich aus der folgenden Beschreibung von Ausführungsbeispielen. In der Zeichnung zeigen:

Figur 1 einen Teilquerschnitt eines Trennwandaufbaus, und

Figur 2 eine Alternative zu Figur 1.

Auf einem Betonuntergrund 1 ist eine erste Leitschicht 2 aus einem elektrisch leitfähigen Kunstharz ununterbrochen aufgetragen. Auf die erste Leitschicht 2 ist eine erste Dichtschicht 3 aus Kunstharz aufgebracht. Die Dichtschicht 3 trägt eine zweite Leitschicht 4, welche in Segmente 5 unterteilt ist.

Auf die zweite Leitschicht 4 ist eine zweite Dichtschicht 6 aus Kunstharz aufgebracht, welche eine dritte Leitschicht 7 trägt. Die Leitschicht 7 ist ebenfalls in Segmente 8 unterteilt. Die Segmente 5, 8 überlappen sich. Sie sind also von Leitschicht 4 zu Leitschicht 7 so gegeneinander versetzt, daß die zwischen ihnen bestehenden Lücken 9 nicht vertikal fluchten.

Auf der dritten Leitschicht 7 sind eine Absandung 10 und eine Schicht aus Kunstharzkitt 11 aufgebracht, auf dem keramische Platten 12 oder Steine oder ein Estrich verlegt sind. Diese bilden die Oberfläche, an der die Flüssigkeit ansteht, deren Vordringen zum Beton-Untergrund 1 durch die Dichtschichten 3, 6 verhindert werden soll.

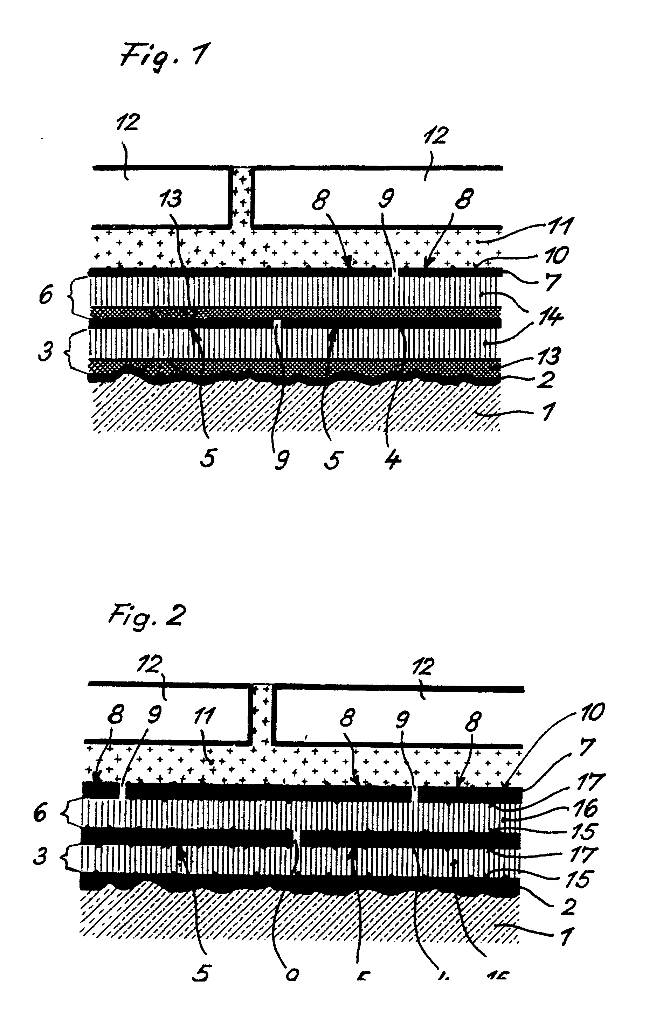

Beim Ausführungsbeispiel nach Figur 1 sind die Dichtschichten 3, 6 aus einer Spachtelschicht 13 und einem kunstharzgebundenen Glasrovinggewebe 14 aufgebaut.

Beim Ausführungsbeispiel nach Figur 2 sind die Dichtschichten 3, 6 aus einer unteren Sandschicht 15, einer Kunstharzschicht 16 und einer oberen Sandschicht 17 aufgebaut.

Die Leitschicht 2 und die Segmente 5, 8 sind über nicht näher dargestellte elektrische Leitungen, die aus dem Wandaufbau herausgeführt sind, an eine Meßeinrichtung angeschlossen, mit der der jeweilige elektrische Widerstand zwischen der ersten Leitschicht 2 und den Segmenten 5 der zweiten Leitschicht 4 sowie den Segmenten 8 der dritten Leitschicht 7 zu messen ist.

Solange die Dichtschichten 3, 6 dicht sind, werden zwischen der ersten Leitschicht 2 und den Segmenten 5, 8 hohe Widerstände gemessen. Tritt in der ersten Dichtschicht 3 unterhalb eines der Segmente 5 ein Leck auf, dann wird bei einer Widerstandsmessung zwischen diesem Segment 5 und der ersten Leitschicht 2 ein entsprechend niedriger Widerstand gemessen. Liegt das Leck der ersten Dichtschicht 3 im Bereich einer der Lücken 9 zwischen den Segmenten 5, dann wird bei einer Messung zwischen dem oberhalb dieser Lücke liegenden Segment 8 der dritten Leitschicht 7 und der ersten Leitschicht 2 ein entsprechend niedriger Widerstand gemessen. Die Dichtschicht 3 ist also lückenlos überwacht.

Tritt in der zweiten Dichtschicht 6 ein Leck auf, dann ist dieses durch eine Widerstandsmessung zwischen den Segmenten 5 der ersten Dichtschicht 3 und den Segmenten 8 der zweiten Dichtschicht 6 feststellbar.

Die Stelle eines etwaigen Lecks ist somit feststellbar. Die hierdurch erreichte Leckortung ermöglicht eine wirtschaftliche Teilreparatur.

In Weiterbildung der Erfindung können auch mehr als zwei Dichtschichten mit segmentierten Leitschichten vorgesehen sein, wobei diese Leitschichten zweckmäßig die gleiche chemische Beständigkeit wie die Dichtschichten aufweisen.

In einer weiteren Ausführungsform kann zur Verlegung der Steine 12 anstelle der Schicht 11 aus Kunstharzkitt eine zementgebundene, wasserglasgebundene und bitumengebundene Mörtelschicht verwendet werden.

## Ansprüche

1. Anordnung zur Überwachung der Flüssigkeitsdichtheit einer Trennwandung, an der eine erste und eine zweite elektrisch leitende Leitschicht Elektroden bilden, die durch eine erste Isolierschicht getrennt sind, wobei wenigstens eine der Leitschichten in Segmente unterteilt ist und auf die zweite Leitschicht eine zweite Isolierschicht aufgebracht ist,
dadurch gekennzeichnet,
daß die Isolierschichten als zu überwachende erste und zweite Dichtschichten (3, 6) ausgebildet sind, daß auf die zweite Dichtschicht (6) eine dritte Leitschicht (7) aufgebracht ist, daß auch die dritte Leitschicht (7) in Segmente (8) unterteilt ist und daß sich die Segmente (5, 8) der zweiten und der dritten Leitschichten (3, 6) überlappen.

2. Anordnung nach Anspruch 1,
dadurch gekennzeichnet,
daß die dritte Leitschicht (7) durch Platten, Steine oder Estrich abgedeckt ist.

3. Anordnung nach Anspruch 1 oder 2,
dadurch gekennzeichnet,
daß die erste Leitschicht (2) auf einem zementgebundenen Untergrund (1) aufgebracht ist.

4. Anordnung nach einem der vorhergehenden Ansprüche,
dadurch gekennzeichnet, daß die Leitschichten (2, 4, 7) aus elektrisch leitendem Kunstharz bestehen.

5. Anordnung nach einem der vorhergehenden Ansprüche,
dadurch gekennzeichnet,
daß die Dichtschichten (3, 6) Kunstharzschichten sind.

6. Anordnung nach Anspruch 4 und 5,
dadurch gekennzeichnet,
daß die Leitschichten (2, 4, 7) und die Dichtschichten (3, 6) die gleiche chemische Beständigkeit aufweisen.

*Fig. 1*

*Fig. 2*